# EUROPEAN PATENT APPLICATION

(11) **EP 1 759 975 A2**
(43) Date of publication of application: **07.03.2007**
(21) Application number: 06005404.6
(22) Date of filing: 16.03.2006
(51) Int. Cl.: B62K 21/08, F16F 9/53

(54) **Steering damper apparatus**

(30) Priority: 30.08.2005 JP 2005250256
(71) Applicant: SHOWA CORPORATION, Gyoda-shi, Saitama (JP)
(72) Inventor: Tomonaga, Takao, Showa Corporation, Shizuoka (JP)
(74) Representative: Grünecker, Kinkeldey, Stockmair & Schwanhäusser Anwaltssozietät

(57) **Abstract**

In a steering damper apparatus (10), a steering shaft (2) is pivoted to a head pipe arranged in a front portion of a vehicle body frame (1), a rotary type viscous fluid damper (20) is arranged in a rear side of the head pipe of the vehicle body frame (1), a linkage (13) is wound around a drive wheel (11) provided in the steering shaft (2) and a driven wheel (12) provided in a rotating shaft of the viscous fluid damper, and a diameter of the drive wheel (11) is larger than a diameter of the driven wheel (12).

## Description

The present invention relates to a steering damper apparatus which is preferably applied to a saddle riding type vehicle such as a motorcycle or the like.

In the motorcycle or the like, as shown in Japanese Patent Application Laid-open No. 2003-104269 (patent document 1), in order to prevent a handle from being unexpectedly turned by a disturbance such as a kickback at a time of running of vehicle, there is a steering damper apparatus generating a damping force against the unexpected turning.

In the steering damper apparatus in the patent document 1, a rotating shaft of a damper is directly coupled to a steering shaft, and the damper is directly rotated on the basis of a rotation of a handle.

In the steering damper apparatus in the patent document 1, the damper is directly rotated on the basis of the rotation of the handle, and a rotation angle of the handle is identical with a rotation angle of the damper. Accordingly, in the motorcycle or the like, when rotating the damper at a small rotation angle such as about 30 degree of the handle, it is hard to obtain a high damping force by a downsized damper.

Further, in the steering damper apparatus in the patent document 1, since a layout of the damper is limited on the steering shaft, and it is necessary to secure a forward visibility of a rider, it is hard to improve a freedom of the layout of the damper.

An object of the present invention is to improve a freedom of a layout of a damper as well as intending to downsize the damper, in a steering damper apparatus.

The present invention relates to a steering damper apparatus comprising: a steering shaft pivoted to a head pipe arranged in a front portion of a vehicle body frame; a rotary type viscous fluid damper arranged in a rear side of the head pipe of the vehicle body frame; and a linkage wound around a drive wheel provided in the steering shaft and a driven wheel provided in a rotating shaft of the viscous fluid damper. Further a diameter of the drive wheel is larger than a diameter of the driven wheel.

The present invention will be more fully understood from the detailed description given below and from the accompanying drawings which should not be taken to be a limitation on the invention, but are for explanation and understanding only.
The drawings:
FIG. 1 is a plan view showing a steering damper apparatus;
FIG. 2 is a sectional view showing an electroviscous fluid damper;
FIG. 3 is a cross sectional view along a line III-III in FIG. 2;
FIG. 4 is an exploded view of a damper;
FIGS. 5A and 5B show an upper case, in which FIG. 5A is a sectional view and FIG. 5B is a plan view;
FIGS. 6A and 6B show a lower case, in which FIG. 6A is a sectional view and FIG. 6B is a plan view;
FIGS. 7A, 7B and 7C show a rotating body, in which FIG. 7A is a sectional view, FIG. 7B is a top view and FIG. 7C is a bottom view;
FIG. 8A, 8B and 8C are schematic views showing an assembling process of the damper;
FIG. 9 is a sectional view showing an electroviscous fluid damper;
FIG. 10 is a cross sectional view along a line X-X in FIG. 9;
FIG. 11 is an exploded view of a damper;
FIGS. 12A and 12B show an upper case, in which FIG. 12A is a sectional view and FIG. 12B is a plan view;
FIGS. 13A and 13B show a lower case, in which FIG. 13A is a sectional view and FIG. 13B is a plan view;
FIGS. 14A, 14B and 14C show a rotating body, in which FIG. 14A is a sectional view, FIG. 14B is a top view and FIG. 14C is a bottom view; and
FIG. 15 is a sectional view showing an electroviscous fluid damper.

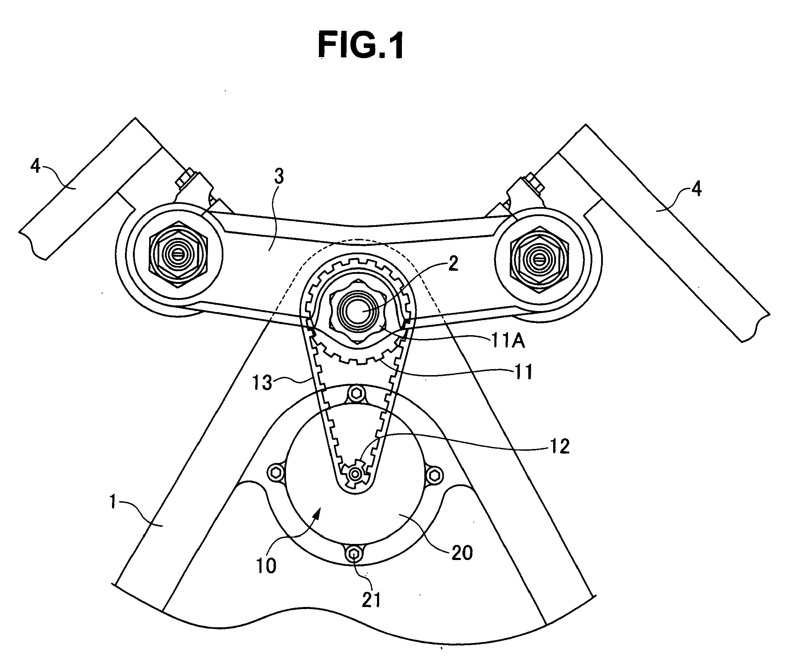

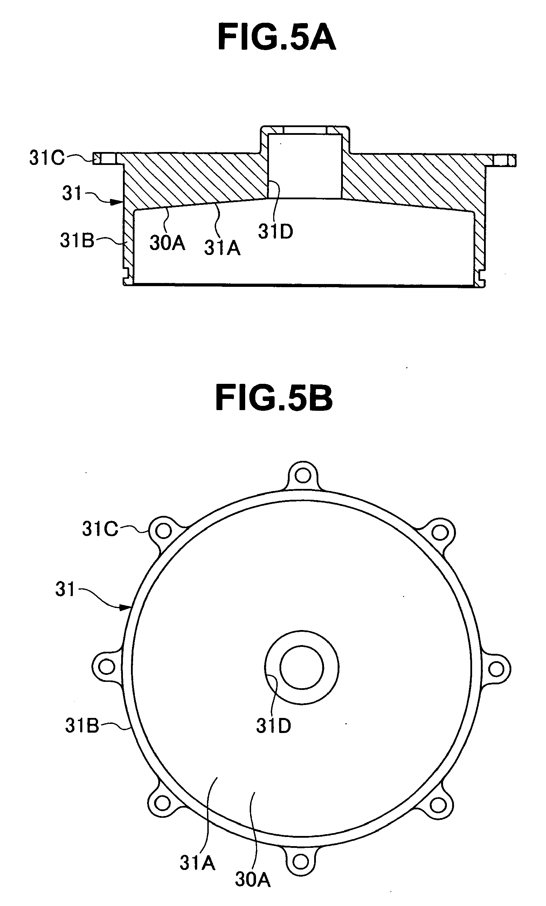

### (Embodiment 1) (FIGS. 1 to 8C)

FIG. 1 shows a part of a motorcycle. A steering shaft 2 is pivoted to a head pipe (not shown) arranged in a front portion of a vehicle body frame 1, and handles 4 are attached to right and left sides of an upper bracket 3 integrally formed with the steering shaft 2.

A steering damper apparatus 10 is structured such as to generate a damping force against an unexpected turning for preventing the handles 4 from being unexpectedly turned by a disturbance such a kickback or the like, and is constructed by fixedly arranging a rotary type electroviscous fluid damper 20 in a rear side of the head pipe in the vehicle frame 1 by a mounting bolt 21.

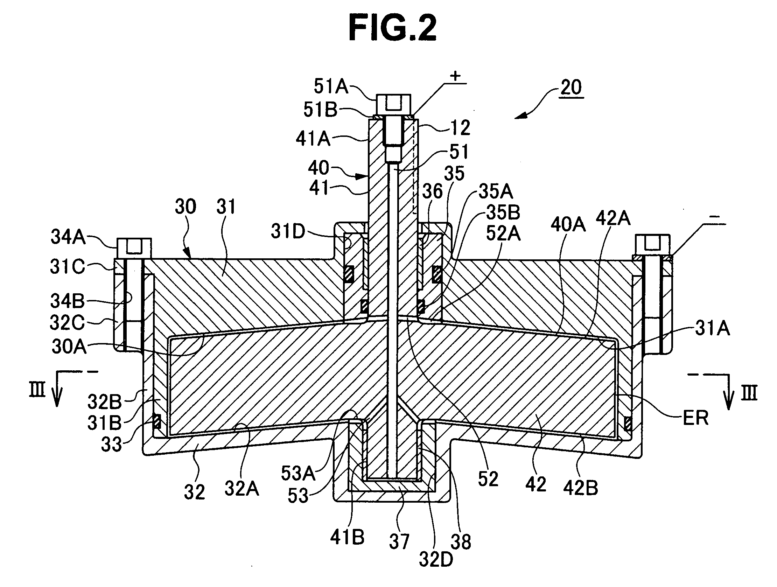

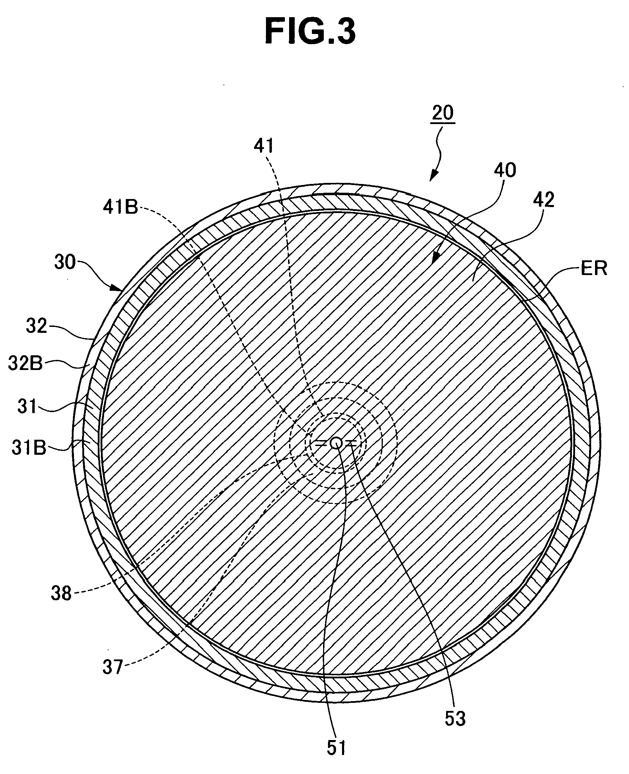

The electroviscous fluid damper 20 is structured, as shown in FIGS. 2 and 3, such that an electroviscous fluid is sealed in a case 30, a rotating body 40 is installed in the case 30, a first electrode (+) 40A is provided in the rotating body 40, and a second electrode (-) 30A is provided in the case 30 so as to face the first electrode 40A. Further, a torque (a damping force) of the rotating body 40 can be controlled by filling a facing gap between both the first and second electrodes 40A and 30A with the electroviscous fluid, and applying an electric field between both the first and second electrodes 40A and 30A.

In this case, in the following description about the electroviscous fluid damper 20, in words "upper" and "lower", a vertically upper side is called as "upper" and a vertically lower side is called as "lower" in a state in which a rotating shaft 41 of the rotating body 40 is arranged in a vertical direction.

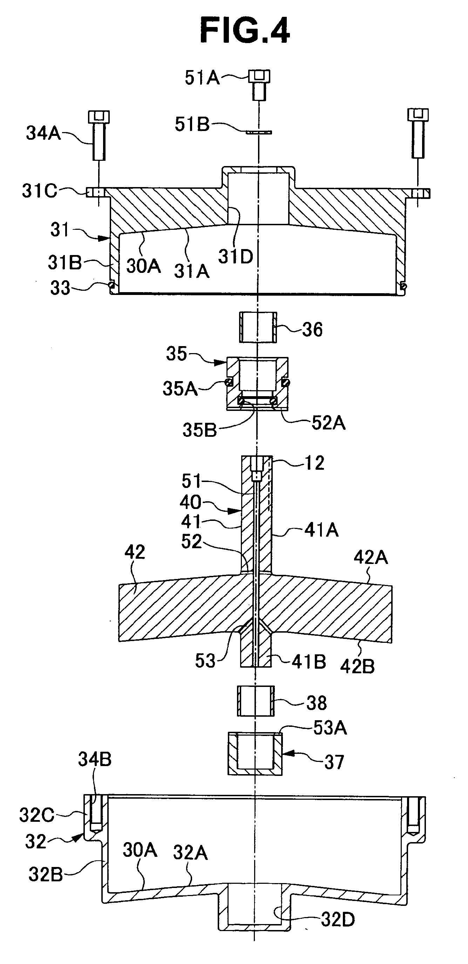

The case 30 is constituted by upper and lower case bodies 31 and 32 as shown in FIGS. 4 to 6B, and is structured by fitting an outer surface of a side wall 31B coming down from an outer periphery of a top surface 31A of the upper case body 31 to an inner surface of a side wall 32B coming up from an outer periphery of a bottom surface 32A of the lower case body 32 via a seal member 33. In the case that the upper case body 31 is formed by resin, the second electrode 30A is formed by applying a coating of a metallic paint or the like on inner surfaces of the top surface 31A and the side wall 31B of the upper case body 31, and in the case that the lower case body 32 is formed by resin, the second electrode 30A is formed by applying a coating of the metallic paint or the like on the bottom surface 32A of the lower case body 32. The seal member 33 is constituted by an O-ring, and is loaded to an annular groove provided close to a lower portion of an outer surface of the side wall 31B of the upper case body 31. The upper and lower case bodies 31 and 32 are integrally formed by screwing a locking screw 34A inserted and attached to an outer peripheral mounting piece 31C of the upper case body 31 to a thread hole 34B of an outer peripheral mounting piece 32C of the lower case body 32.

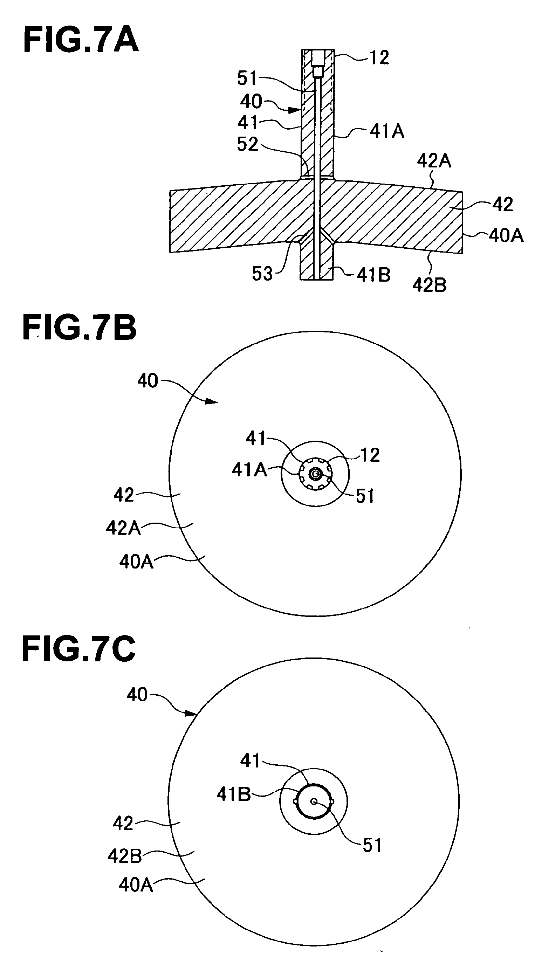

The rotating body 40 is structured, as shown in FIGS. 4 and 7A to 7C, such that a thick plate-like rotating plate 42 is provided in the rotating shaft 41 pivoted to the case 30 in a liquid tight manner. In the case that the rotating plate 42 is formed by resin, the first electrode 40A is formed by applying a coating of a metallic paint or the like to a surface of the rotating plate 42. The rotating shaft 41 is constituted by an upper shaft 41A protruding to an upper side of the rotating plate 42, and a lower shaft 41B protruding to a lower side.

As shown in FIGS. 4 to 5B, the upper case body 31 is provided with a penetrating bearing hole 31D in a center portion of the top surface 31A, and a resin insulating bush 35 is press-fitteed to the bearing hole 31D. The insulating bush 35, constituted by a penetrating tube body, is press-fitted to the bearing hole 31D. The insulating bush 35 has a seal member 35A such as an O-ring in an outer peripheral annular groove, a seal member 35B such as an O-ring seated in an inner peripheral annular groove, and a bearing bush 36 having a Teflon (trade mark) coated metal ring in an inner peripheral step hole.

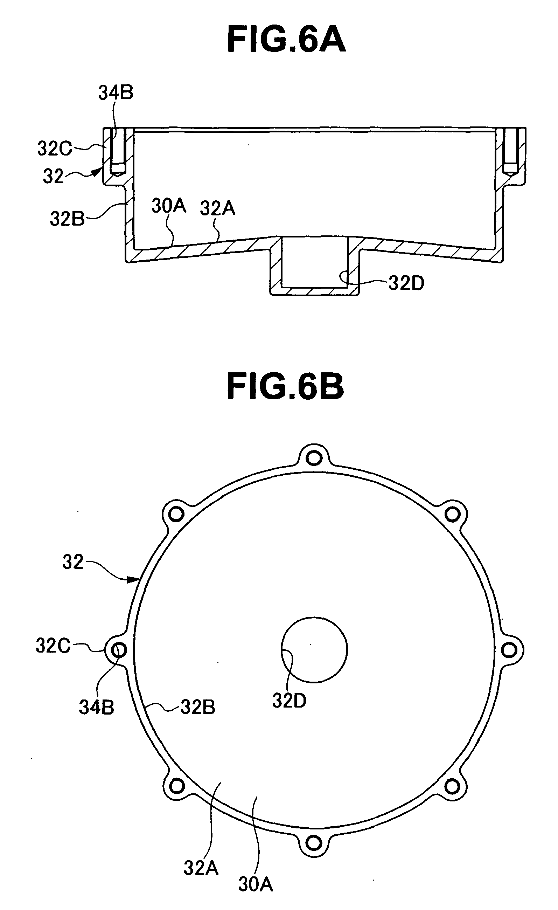

As shown in FIGS. 4, 6A and 6B, the lower case body 32 is provided with an occlusive bearing hole 32D in a center portion of the bottom surface 32A. A resin insulating bush 37 is pressure inserted to the bearing hole 32D. The insulating bush 37 is constituted by a closed-end tube body, and is provided with a bearing bush 38 having a Teflon (trade mark) coated metal ring in an inner peripheral hole.

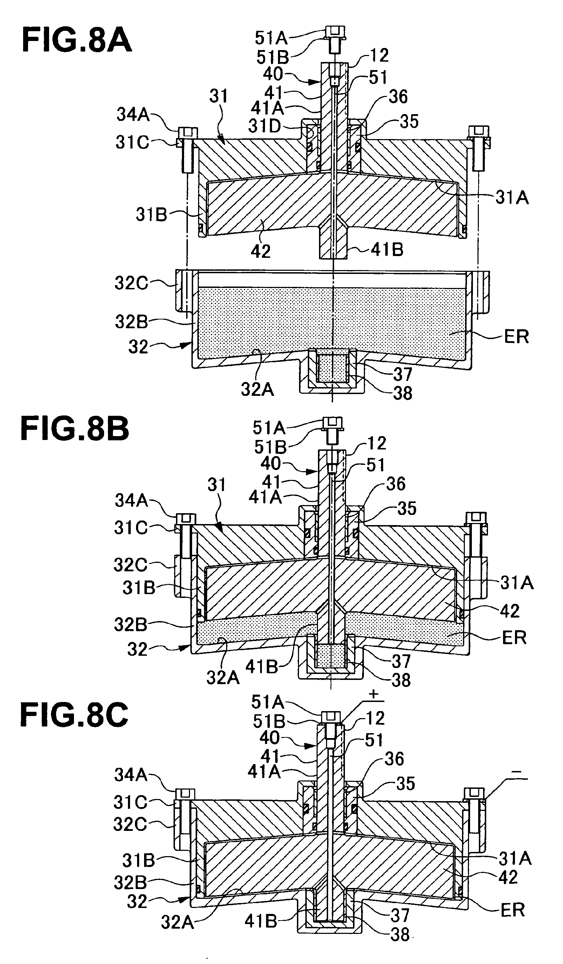

As shown in FIGS. 8A to 8C, the electroviscous fluid damper 20 is assembled by inserting the rotating shaft 41 (the upper shaft 41A) of the rotating body 40 to the seal member 35B provided in the insulating bush 35 of the upper case body 31, and the bearing bush 36, forming a unit assembly in which a center side of an upper surface of the rotating plate 42 is brought into contact with a lower end surface of the insulating bush 35, inserting the upper case body 31 and the rotating body 40 constituting the unit assembly to the lower case body 32 loaded with the electroviscous fluid, inserting the rotating shaft 41 (the lower shaft 41B) of the rotating body 40 to the bearing bush 38 provided in the insulating bush 37 of the lower case body 32, bringing a center side of a lower surface of the rotating plate 42 into contact with an upper end surface of the insulating bush 37, lapping the outer peripheral mounting piece 31C of the upper case body 31 over the outer peripheral mounting piece 32C of the lower case body 32 and fastening them by a locking screw 34A. In this case, a drain bolt 51A is attached to and detached from an outer opening end of a liquid discharge hole 51 provided in the rotating shaft 41 of the rotating body 40 as mentioned below via a packing 51B.

A description will be in detail given below of (A) a structure of the steering damper apparatus 10, and (B) a structure for discharging bubbles within the case 30 in the electroviscous fluid damper 20.

### (A) Structure of steering damper apparatus 10

The steering damper apparatus 10 is structured, as shown in FIG. 1, such that a drive wheel 11 constituted by a gear is fixed to an upper end portion of the steering shaft 2 by a nut 11A, a driven wheel 12 constituted by a gear is formed in an outer periphery of the rotating shaft 41 (the upper shaft 41A) protruding to an outer side from the case 30 (the bearing hole 31D of the upper case body 31) of the electroviscous fluid damper 20 arranged in a rear side of the head pipe in the vehicle body frame 1, and a linkage 13 constituted by a belt (or a chain) is wound around the drive wheel 11 and the driven wheel 12. At this time, a diameter of the drive wheel 11 is formed larger than a diameter of the driven wheel 12.

Accordingly, in the steering damper apparatus 10, if the rotation of the steering shaft 2 rotated by the handle 4 is amplified on the basis of a diameter ratio of the drive wheel 11 with respect to the driven wheel 12, and then, is transmitted to the electroviscous fluid damper 20, the rotating body 40 rotates while shearing the electroviscous fluid between the rotating body 40 and the case 30. In the electroviscous fluid damper 20, when the electric field is not applied between the first and second electrodes 40A and 30A, the torque of the rotating body 40 is small and the damping force is low because the electroviscous fluid damper within the case 30 has a low viscosity. If the viscosity of the electroviscous fluid is made high by applying the electric field between the first and second electrodes 40A and 30A, the torque of the rotating body 40 becomes large and the damping force becomes high. It is possible to control the viscosity of the electroviscous fluid so as to control the damping force on the basis of rise and fall of a voltage applied between the first and second electrodes 40A and 30A.

In accordance with the present embodiment, the following operation and effects can be achieved.
(a) The rotation of the steering shaft 2 rotated by the handle 4 is amplified on the basis of the diameter ratio of the drive wheel 11 with respect to the driven wheel 12, and then, is transmitted to the electroviscous fluid damper 20. Accordingly, even if the rotation angle of the handle 4 is small in the motorcycle or the like, it is possible to rotate the rotating shaft 41 of the damper 20 at an increased speed, and a high damping force can be obtained. Thereby, it is possible to downsize the damper 20 with respect to a fixed damping force.
(b) It is possible to couple the damper 20 to the steering shaft 2 by the linkage 13, and it is possible to improve a freedom of the layout of the damper 20. In the motorcycle or the like, it is possible to arrange the damper 20 while securing a forward visibility of the rider and securing a capacity of the fuel tank.
(c) Employing the electroviscous fluid damper 20, it is possible that the damping force is not generated at an unnecessary time and a desired damping force can be generated at a necessary time, by regulating an applied voltage to the electroviscous fluid.

### (B) Structure of discharging bubbles within case 30 in electroviscous fluid damper 20

The electroviscous fluid damper 20 is structured such that each of an upper surface 42A and a lower surface 42B of the rotating plate 42 of the rotating body 40 is inclined downward toward an outer periphery from a center side, and each of the top surface 31A and the bottom surface 32A of the case 30 (the upper and lower case bodies 31 and 32) facing each of the upper surface 42A and the lower surface 42B of the rotating plate 42 via upper and lower gaps is inclined downward toward an outer periphery from a center side.

The electroviscous fluid damper 20 is provided with a liquid discharge hole 51 in an axial direction of a center portion of the rotating shaft 41 of the rotating body 40, is provided with a communication hole 52 intersecting in a diametrical direction or a radial direction from the liquid discharge hole 51 and formed slightly downward toward a gap on the upper surface 42A of the rotating plate 42 in the upper shaft 41A side, and is provided with a communication hole 53 intersecting in the diametrical direction or the radial direction from the liquid discharge hole 51 and formed downward toward a gap below the lower surface 42B of the rotating plate 42 in the lower shaft 41B side. At this time, a communication groove 52A penetrating in the diametrical direction or the radial direction is formed in a lower end surface of the insulating bush 35 to which the upper shaft 41A is inserted and which is brought into contact with the center side of the upper surface of the rotating plate 42 as mentioned above, whereby the communication hole 52 of the rotating shaft 41 can be communicated with the gap on the upper surface 42A of the rotating plate 42. Further, a communication groove 53A penetrating in the diametrical direction or the radial direction is formed in an upper end surface of the insulating bush 37 to which the lower shaft 41B is inserted and which is brought into contact with the center side of the lower surface of the rotating plate 42 as mentioned above, whereby the communication hole 53 of the rotating shaft 41 can be communicated with the gap below the lower surface 42B of the rotating plate 42.

The electroviscous fluid damper 20 passes through the liquid discharge hole 51 provided in the rotating shaft 41 from the lower end surface of the rotating shaft 41 to the upper end surface.

The electroviscous fluid damper 20 is structured such that the rotating shaft 41 protrudes to an outer side from the bearing hole 31D of the upper case body 31, and the drain bolt 51A is detachably screwed to an external opening end of the liquid discharge hole 51 provided in the rotating shaft 41 via the packing 51B.

Accordingly, an assembling procedure of the electroviscous fluid damper 20 and a discharging procedure of the bubbles within the case 30 are as follows (FIG. 8A to 8C).
(1) A unit assembly in which the center side of the upper surface of the rotating plate 42 is brought into contact with the lower end surface of the insulating bush 35 is formed by inserting the rotating shaft 41 (the upper shaft 41A) of the rotating body 40 to the seal member 35B and the bearing bush 36 provided in the insulating bush 35 of the upper case body 31. The drain bolt 51A with respect to the liquid discharge hole 51 of the rotating shaft 41 remains detached (FIG. 8A). A suitable amount of electroviscous fluid ER is filled in an inner portion of the lower case 32 (FIG. 8A).
(2) An outer surface of the side wall 31B of the upper case body 31 is fitted to an inner surface of the side wall 32B of the lower case body 32 via the seal member 33, the rotating shaft 41 (the lower shaft 41B) of the rotating body 40 is inserted to the bearing bush 38 provided in the insulating bush 37 of the lower case body 32, and the center side of the lower surface of the rotating plate 42 is brought into contact with the upper end surface of the insulating bush 37.
(3) When the unit assembly of the upper case body 31 and the rotating body 40 is inserted to the lower case body 32 such as the item (2) mentioned above, the electroviscous fluid at a volume at which the unit assembly is inserted to the lower case body 32 is extruded to the outer side through the liquid discharge hole 51 via the communication holes 52 and 53 of the rotating shaft 41, and the bubbles within the case 30 mixing in the high-viscosity electroviscous fluid are discharged to the outer side together with the electroviscous fluid.
(4) The outer peripheral mounting piece 31C of the upper case body 31 is lapped over the outer peripheral mounting piece 32C of the lower case body 32, and they are fastened by the attaching screw 34A.

In accordance with the present embodiment, the following operations and effects can be achieved.
(a) When filling the viscous fluid, the bubbles within the case 30 rise to the surface toward the rotating shaft 41 along the slopes of the top surface 31A of the case 30, the upper surface 42A of the rotating plate 42, the bottom surface 32A of the case 30 and the lower surface 42B of the rotating plate 42 together with the viscous fluid, rise to the surface toward the liquid discharge hole 51 in the upper and lower communication holes 52 and 53 of the rotating shaft 41, and are discharged from the liquid discharge hole 51 at the last.
(b) The bubbles within the case 30 are concentrically discharged from the liquid discharge hole 51 of the rotating shaft 41 together with the viscous fluid, a recovery performance of the viscous fluid discharged from the case 30 is improved, and an assembling environment of the viscous fluid damper 20 is not contaminated.
(c) Since the liquid discharge hole 51 is penetrated from the lower end surface of the rotating shaft 41 to the upper end surface, the bubbles attached to the lower end surface side of the rotating shaft 41 within the case 30 can be discharged from the liquid discharge hole 51 together with the viscous fluid.
(d) The case 30 after discharging the viscous fluid can be sealed by attaching the drain bolt 51A to the opening end of the outer portion of the liquid discharge hole 51.
(e) The case 30 can be sealed by fitting the upper and lower case bodies 31 and 32 via the seal member 33.

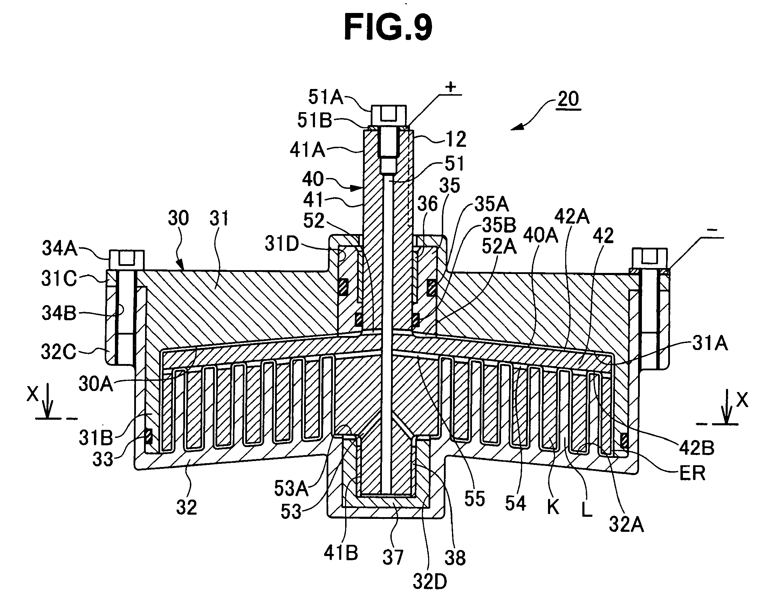

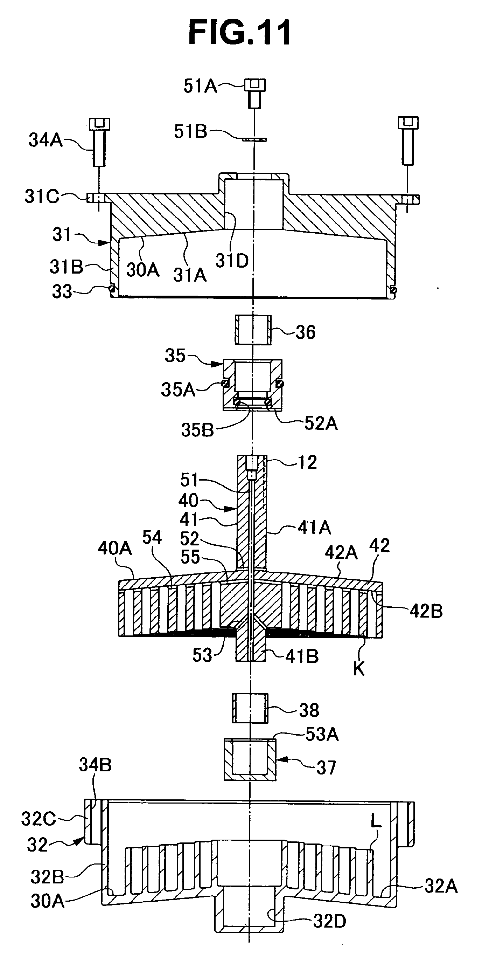

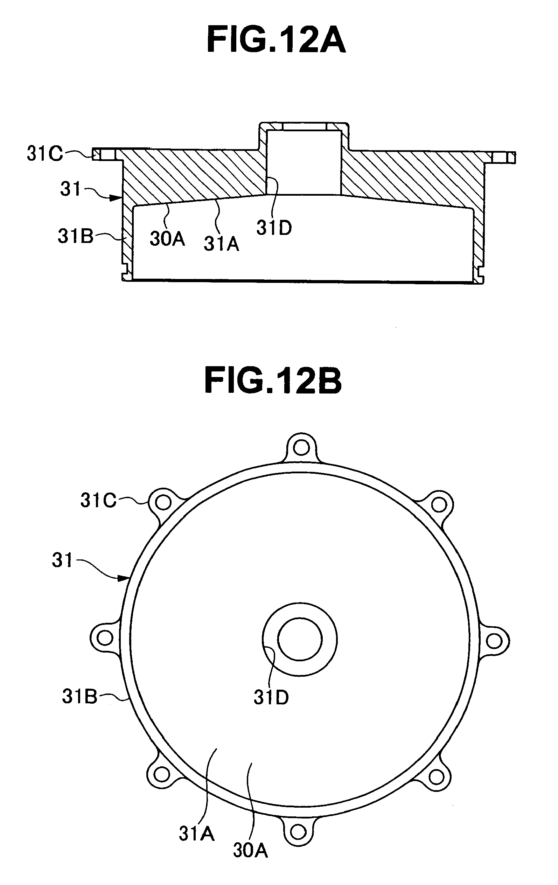

### (Embodiment 2) (FIGS. 9 to 14C)

An embodiment 2 is different from the embodiment 1 in structures of the case 30 (the lower case body 32) of the electroviscous fluid damper 20 and the rotating body 40 (the rotating plate 42).

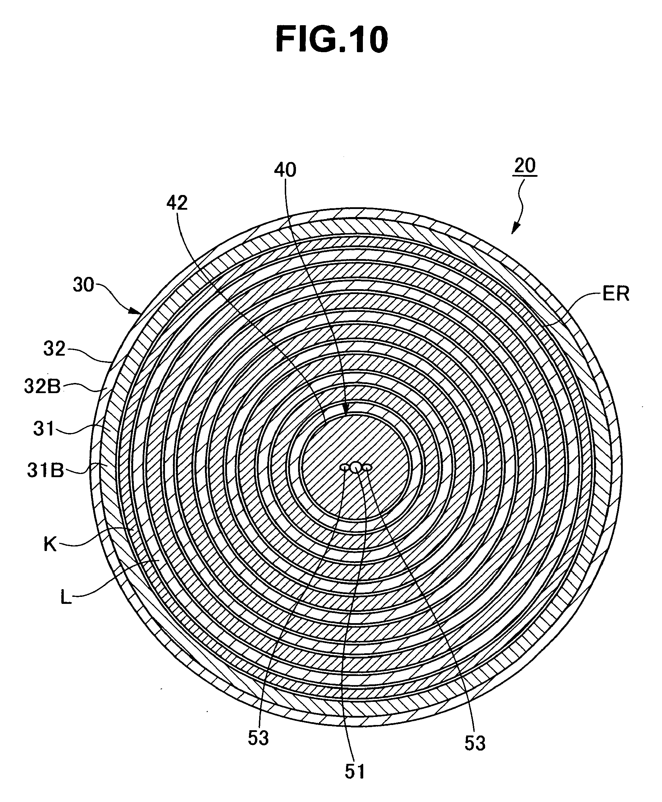

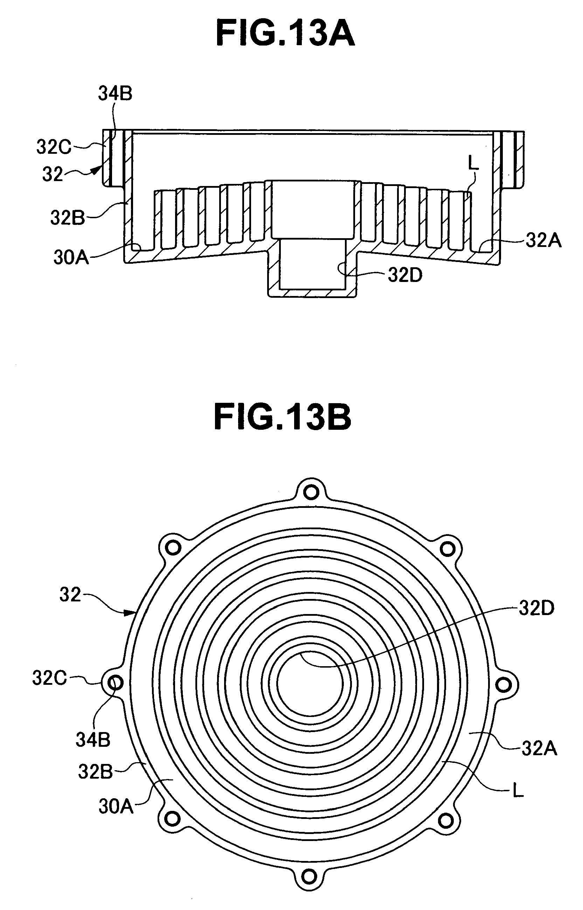

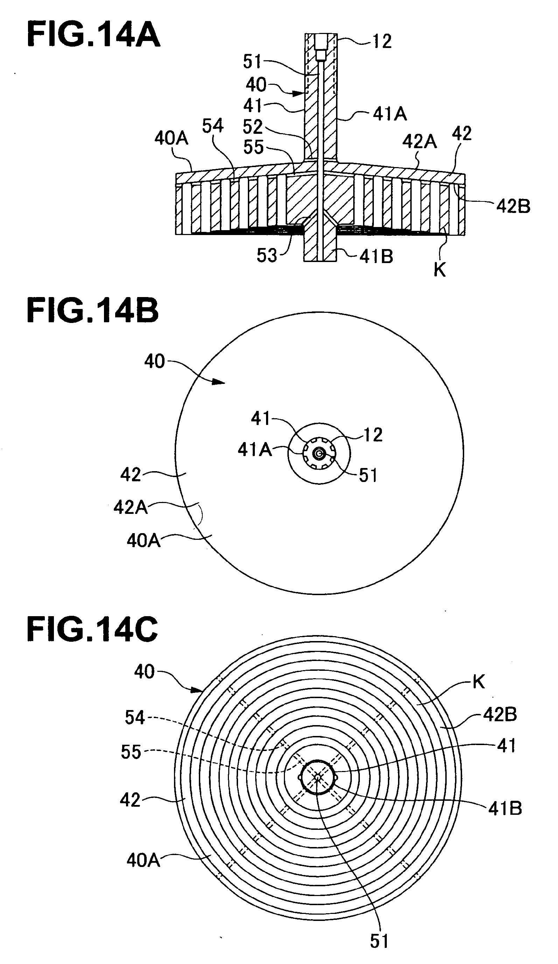

The electroviscous fluid damper 20 is structured, as shown in FIGS. 9 and 10, such that the rotating plate 42 of the rotating body 40 is formed thick only in a center side and thin in an outer peripheral side, a thick plate side upper surface 42A and a thin plate side upper surface 42A are continuously formed, and a thick plate side lower surface 42B and a thin plate side lower surface 42B are formed in a step shape. Further, in order to increase a facing area of the first electrode 40A in the rotating body 40 side and the second electrode 30A in the case 30 side, in addition to the structure of the embodiment 1, a protrusion formed integrally (which may be separately assembled in) and protruding to one side (a lower side) in an axial direction, an annular protrusion K in the present embodiment, is provided in the rotating plate 42 of the rotating body 40, the thin plate side lower surface 42B in the present embodiment (FIGS. 14A to 14C), and a protrusion formed integrally (which may be separately assembled in) and protruding to the other side (an upper side) in the axial direction, an annular protrusion L in the present embodiment is provided in the case 30, the bottom surface 32A of the lower case body 32 in the present embodiment (FIGS. 13A and 13B). Further, the annular protrusion K of the rotating body 40 and the annular protrusion L of the case 30 are fitted in such a manner that they can relatively rotate with each other via a gap, the first electrode 40A is formed in a surface including the annular protrusion K of the rotating body 40, and the second electrode 30A is formed in an inner surface (the inner surfaces of the top surface 31A and the side wall 31B of the upper case body 31, and the bottom surface 32A of the lower case body 32) including the annular protrusion L of the case 30.

The electroviscous fluid damper 20 is structured, as shown in FIGS. 14A to 14C, such that the annular protrusion K of the rotating body 40 is provided at each of a plurality of coaxial rotational radial positions on the lower surface 42B of the rotating plate 42. Further, the annular protrusion L of the case 30 is provided at each of a plurality of coaxial rotational radial positions on the bottom surface 32A of the lower case body 32, as shown in FIGS. 13A and 13B.

Further, at this time, in order to secure a performance of discharging the bubbles within the case 30, the electroviscous fluid damper 20 is provided with a through hole 54 extending along a radial direction of the lower surface 42B of the rotating plate 42, in a root of the annular protrusion K provided in the lower surface 42B of the rotating plate 42, on a diameter extending in a diametrical direction or a radial direction of the rotating plate 42 intersecting the rotating shaft 41 of the rotating body 40, in addition to the structure in the embodiment 1, as shown in FIGS. 9, 10 and 14A to 14C. Further, a communication hole 55 formed downward is provided in such a manner as to intersect in the diametrical direction or the radial direction from the liquid discharge hole 51 of the rotating shaft 41 and extend along the lower surface 42B of the rotating plate 42.

In accordance with the present embodiment, in addition to the operations and effects of the embodiment 1, the following operations and effects can be achieved.
(a) Since the protrusion K of the rotating body 40 and the protrusion L of the case 30 are fitted in such a manner that they can relatively rotate with each other via the gap, the first electrode 40A is provided in the protrusion K of the rotating body 40, and the second electrode 30A is provided in the protrusion L of the case 30, it is possible to increase the facing area of the first electrode 40A in the rotating body 40 side and the second electrode 30A in the case 30 side, and it is possible to enlarge the control range of the torque characteristic (the damping characteristic) on the basis of the enlargement of the electric field, in comparison with the structure which uses only one flat plate-shaped rotating body 40.
(b) Since the protrusion K is provided in the rotating body 40, the protrusion L is provided in the case 30, and the protrusions K and L are only fitted in such a manner that they can relatively rotate via the gap, it is possible to reduce the number of the parts so as to improve an assembling characteristic. At this time, the protrusion K of the rotating body 40 is protruded to one side along the axial direction, a removing direction of the metal mold at a time of forming the rotating body 40 by a metal mold is uniform, and an integral molding for forming the protrusion K in the rotating body 40 is easily executed. Further, the protrusion L of the case 30 is protruded to one side along the axial direction, the removing direction of the metal mold at a time of forming the case 30 by the metal mold is uniform, and the integral molding for forming the protrusion L in the case 30 is easily executed.
(c) The protrusion K of the rotating body 40 is provided at each of a plurality of rotational radial positions on the rotating plate 42 of the rotating body 40, and the protrusion L of the case 30 is provided at each of a plurality of radial positions on the inner surface of the case 30. Accordingly, it is possible to increase the facing area of the first electrode 40A of the rotating body 40 side and the second electrode 30A in the case 30 side, by fitting the protrusions K provided at a plurality of rotational radial positions of the rotating body 40, and the protrusions L provided at a plurality of radial positions of the case 30 to each other via the gaps so as to be relatively rotatable, and forming the respective first and second electrodes 40A and 30A in a plurality of protrusions K and L.
(d) The protrusion K of the rotating body 40 is formed in the annular shape, and the protrusion L of the case 30 is formed in the annular shape. Accordingly, it is possible to increase the facing area of the first electrode 40A of the rotating body 40 side and the second electrode 30A in the case 30 side, by fitting a plurality of annular protrusions K formed in the coaxial shape with the rotating body 40 and provided continuously in the peripheral direction, and a plurality of annular protrusions L formed in the coaxial shape with case 30 and provided continuously in the peripheral direction to each other via the gaps so as to be relatively rotatable, and forming the respective first and second electrodes 40A and 30A in a plurality of protrusions K and L.
   In accordance with the present embodiment, the following operations and effects can be further achieved.
(e) When fitting the protrusion K in the lower surface 42B of the rotating plate 42 and the protrusion L in the bottom surface 32A of the case 30 to each other via the gap so as to be relatively rotatable, and increasing places of the facing gap between the rotating plate 42 and the case 30, the bubbles making an intrusion into the portion between the adjacent protrusions K in the lower surface 42B of the rotating plate 42 rise to the surface from the communication hole 55 of the rotating shaft 41 toward the liquid discharge hole 51 via the through hole 54 in the root of the protrusion K in the lower surface 42B of the rotating plate 42 together with the viscous fluid, and are discharged from the liquid discharge hole 51 at the last.

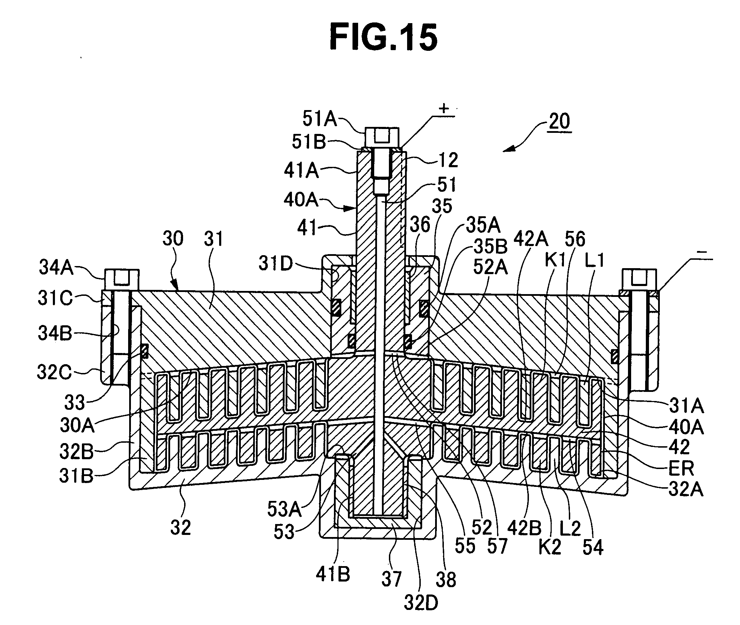

### (Embodiment 3) (FIG. 15)

An embodiment 3 is different from the embodiment 1 in structures of the case 30 (the upper and lower case bodies 31 and 32) of the electroviscous fluid damper 20 and the rotating body 40 (the rotating plate 42).

The electroviscous fluid damper 20 is structured, as shown in FIGS. 15, such that the rotating plate 42 of the rotating body 40 is formed thick only in a center side and thin in an outer peripheral side, a thin plate side upper surface 42A is formed in a step shape such as to be in a lower position with respect to a thick plate side upper surface 42A, and a thin plate side lower surface 42B is formed in a step shape such as to be in an upper position with respect to a thick plate side lower surface 42B. Further, in order to increase a facing area of the first electrode 40A in the rotating body 40 side and the second electrode 30A in the case 30 side, in addition to the structure of the embodiment 1, a protrusion formed integrally (which may be separately assembled in) and protruding to one side (an upper side) in an axial direction, an upward annular protrusion K1 in the present embodiment, is provided in the thin plate side upper surface 42A, and a protrusion formed integrally (which may be separately assembled in) and protruding to the other side (a lower side) in the axial direction, a downward annular protrusion K2 in the present embodiment is provided in the thin plate side lower surface 42B, in the rotating plate 42 of the rotating body 40. Further, in the case 30, a protrusion formed integrally (which may be separately assembled in) and protruding to the other side (a lower side) in an axial direction, a downward annular protrusion L1 in the present embodiment, is provided in the top surface 31A of the upper case body 31, and a protrusion formed integrally (which may be separately assembled in) and protruding to one side (an upper side) in the axial direction, an upward annular protrusion L2 in the present embodiment is provided in the bottom surface 32A of the lower case 32.

Further, the upward annular protrusion K1 of the rotating body 40 and the downward annular protrusion L1 of the case 30, and the downward annular protrusion K2 of the rotating body 40 and the upward annular protrusion L2 of the case 30 are respectively fitted via the gaps so as to be relatively rotatable, the first electrode 40A is formed in a surface including the protrusions K1 and K2 of the rotating body 40, and the second electrode 30A is formed in an inner surface (the inner surfaces of the top surface 31A and the side wall 31B of the upper case body 31, and the side surface 32A of the lower case body 32) including the protrusions L1 and L2 of the case 30.

The electroviscous fluid damper 20 is structured such that each of the protrusions K1 and K2 of the rotating body 40 is provided at each of a plurality of coaxial rotational radial positions on the upper surface 42A and the lower surface 42B of the rotating plate 42. Further, each of the protrusions L1 and L2 of the case 30 is provided at each of a plurality of coaxial rotational radial positions on the top surface 31A of the upper case body 31 and the bottom surface 32A of the lower case body 32.

Further, at this time, in order to secure a performance of discharging the bubbles within the case 30, the electroviscous fluid damper 20 is provided with a through hole 54 extending along a radial direction of the lower surface 42B of the rotating plate 42, in a root of the downward annular protrusion K2 provided in the lower surface 42B of the rotating plate 42, on a diameter extending in a diametrical direction or a radial direction of the rotating plate 42 intersecting the rotating shaft 41 of the rotating body 40, in addition to the structure in the embodiment 1. Further, a communication hole 55 formed downward is provided in such a manner as to intersect in the diametrical direction or the radial direction from the liquid discharge hole 51 of the rotating shaft 41 and extend along the lower surface 42B of the rotating plate 42.

Further, in order to secure a performance of discharging the bubbles within the case 30, the electroviscous fluid damper 20 is provided with a through hole 56 extending along a radial direction of the top surface 31A of the upper case body 31, in a root of the downward annular protrusion L1 provided in the top surface 31A, on a diameter extending in a diametrical direction or a radial direction of the upper case body 31, in addition to the structure in the embodiment 1. In this case, a communication hole 57 formed downward is provided along the top surface 31A of the upper case body 31 from the liquid discharge hole 51 of the rotating shaft 41. The communication hole 57 is in common with the communication hole 52 in the embodiment 1.

In accordance with the present embodiment, in addition to the operations and effects of the embodiment 1, the following operations and effects can be achieved.
(a) Since the protrusion K1 protruding to the one side of the rotating body 40 and the protrusion L1 protruding to the other side of the case 30 are fitted in such a manner that they can relatively rotate with each other via the gap, the protrusion K2 protruding to the other side of the rotating body 40 and the protrusion L2 protruding to one side of the case 30 are fitted in such a manner that they can relatively rotate with each other via the gap, the first electrode 40A is provided in the protrusions K1 and K2 of the rotating body 40, and the second electrode 30A is provided in the protrusions L1 and L2 of the case 30, it is possible to increase the facing area of the first electrode 40A in the rotating body 40 side and the second electrode 30A in the case 30 side, and it is possible to enlarge the control range of the torque characteristic (the damping characteristic) on the basis of the enlargement of the electric field, in comparison with the structure which uses only one flat plate-shaped rotating body 40.
(b) The protrusions K1 and K2 are protruded to both sides of the rotating body 40, the protrusions L1 and L2 are protruded to both sides of the case 30, the protrusion K1 in the one side of the rotating body 40 and the protrusion L1 in the one side of the case 30 are fitted to each other, and the protrusion K2 in the other side of the rotating body 40 and the protrusion L2 of the case 30 are fitted. Accordingly, it is possible to lower a height of each of the protrusions K1 and K2 of the rotating body 40 and a height of each of the protrusions L1 ad L2 of the case 30, which are required for securing a certain facing area between the first electrode 40A in the rotating body 40 side and the second electrode 30A in the case 30 side. This can easily improve a dimensional precision and an assembling precision of each of the protrusions K1 and K2 of the rotating body 40 and each of the protrusions L1 and L2 of the case 30, and further, it is possible to easily make the gap between the protrusions K1 and L1 and the gap between the protrusions K2 and L2, and it is possible to enlarge the control range of the torque characteristic (the damping characteristic) by reinforcing the electric field.
(c) Since, simply, the protrusions K1 and K2 are provided in both sides of the rotating body 40, the protrusions L1 and L2 are provided in both sides of the case 30, and the protrusions K1 and L1, and the protrusions K2 and L2 are fitted in such a manner that they can relatively rotate via the gaps, it is possible to reduce the number of the parts so as to improve an assembling characteristic. At this time, the protrusions K1 and K2 of the rotating body 40 are protruded to one side and the other side along the axial direction, a removing direction of the mold at a time of forming the rotating body 40 by a metal mold is uniform, and an integral molding for forming the protrusions K1 and K2 in the rotating body 40 is easily executed. Further, the protrusions L1 and L2 of the case 30 are protruded to one side and the other side along the axial direction, the removing direction of the metal mold at a time of forming the case 30 by the metal mold is uniform, and the integral molding for forming the protrusions L1 and L2 in the case 30 is easily executed.
(d) The protrusions K1 and K2 of the rotating body 40 are provided at each of a plurality of rotational radial positions on the rotating plate of the rotating body 40, and the protrusions L1 and L2 of the case 30 are provided at each of a plurality of radial positions on the inner surface of the case 30. Accordingly, it is possible to increase the facing area of the first electrode 40A of the rotating body 40 side and the second electrode 30A in the case 30 side, by fitting the protrusions K1 and K2 provided at a plurality of rotational radial positions of the rotating body 40, and the protrusions L1 and L2 provided at a plurality of radial positions of the case 30 to each other via the gaps so as to be relatively rotatable, and forming the respective first and second electrodes 40A and 30A in a plurality of protrusions K1, K2, L1 and L2.
(e) The protrusions K1 and K2 of the rotating body 40 are formed in the annular shape, and the protrusions L1 and L2 of the case 30 are formed in the annular shape. Accordingly, it is possible to increase the facing area of the first electrode 40A in the rotating body 40 side and the second electrode 30A in the case 30 side, by fitting a plurality of annular protrusions K1 and K2 formed in the coaxial shape with the rotating body 40 and provided continuously in the peripheral direction, and a plurality of annular protrusions L1 and L2 formed in the coaxial shape with case 30 and provided continuously in the peripheral direction to each other via the gaps so as to be relatively rotatable, and forming the respective first and second electrodes 40A and 30A in a plurality of protrusions K1, K2, L1 and L2.
   In accordance with the present embodiment, the following operations and effects can be further achieved.
(f) When fitting the protrusion K2 in the lower surface 42B of the rotating plate 42 and the protrusion L2 in the bottom surface 32A of the case 30 to each other via the gap so as to be relatively rotatable, and increasing place of the facing gap between the rotating plate 42 and the case 30, the bubbles making an intrusion into the portion between the adjacent protrusions K2 in the lower surface 42B of the rotating plate 42 rise to the surface from the communication hole 55 of the rotating shaft 41 toward the liquid discharge hole 51 via the through hole 54 in the root of the protrusion K2 in the lower surface 42B of the rotating plate 42 together with the viscous fluid, and are discharged from the liquid discharge hole 51 at last.
(g) When fitting the protrusion L1 in the top surface 31A of the case 30 and the protrusion K1 in the top surface 42A of the rotating plate 42 to each other via the gap so as to be relatively rotatable, and increasing places of the facing gap between the rotating plate 42 and the case 30, the bubbles making an intrusion into the portion between the adjacent protrusions L1 in the top surface 31A of the case 30 rise to the surface from the communication hole 57 of the rotating shaft 41 toward the liquid discharge hole 51 via the through hole 56 in the root of the protrusion L1 in the top surface 31A of the case 30 together with the viscous fluid, and are discharged from the liquid discharge hole 51 at the last.

The steering damper apparatus in accordance with the present invention can be applied to a structure using a viscous fluid damper in which a root of a single vane is provided in an oscillating shaft (for example, Japanese Patent Application Laid-open No. 2003-104269), without the limitation of the viscous fluid damper having the rotating plate provided in an entire periphery around the rotating shaft.

As heretofore explained, embodiments of the present invention have been described in detail with reference to the drawings. However, the specific configurations of the present invention are not limited to the illustrated embodiments but those having a modification of the design within the range of the presently claimed invention are also included in the present invention. For example, the viscous fluid damper in accordance with the present invention can be applied to a structure using a viscous fluid such as silicone oil or the like, without being limited to the electroviscous fluid damper.

Although the invention has been illustrated and described with respect to several exemplary embodiments thereof, it should be understood by those skilled in the art that the foregoing and various other changes, omissions and additions may be made to the present invention without departing from the spirit and scope thereof. Therefore, the present invention should not be understood as limited to the specific embodiment set out above, but should be understood to include all possible embodiments which can be encompassed within a scope of equivalents thereof with respect to the features set out in the appended claims.

## Claims

1. A steering damper apparatus comprising:
a steering shaft pivoted to a head pipe arranged in a front portion of a vehicle body frame;
a rotary type viscous fluid damper arranged in a rear side of the head pipe of the vehicle body frame; and
a linkage wound around a drive wheel provided in the steering shaft and a driven wheel provided in a rotating shaft of the viscous fluid damper,
wherein a diameter of the drive wheel is larger than a diameter of the driven wheel.

2. A steering damper as claimed in claim 1, wherein the viscous fluid damper is constituted by an electroviscous fluid damper.

3. A steering damper as claimed in claim 2, wherein the electroviscous fluid damper is structured such that an electroviscous fluid is sealed in a case, a rotating body is installed in the case, a first electrode is provided in the rotating body, a second electrode is provided in the case so as to face the first electrode, the electroviscous fluid is filled in a facing gap between the first and second electrodes, and a torque of the rotating body is controllable by applying an electric field between the first and second electrodes.

4. A steering damper as claimed in claim 3, wherein the rotating body is provided with a rotating plate in a rotating shaft pivoted to the case in a liquid tight manner,
wherein each of an upper surface and a lower surface of the rotating plate is directed downward toward an outer periphery in a state in which the rotating shaft of the rotating body is arranged in a vertical direction,
wherein each of a top surface and a bottom surface of the case facing to each of the upper surface and the lower surface of the rotating plate via upper and lower gaps is directed downward toward an outer periphery, and
wherein a liquid discharge hole is provided in an axial direction of the rotating shaft, a communication hole directed downward toward a gap above the top surface of the rotating plate from the liquid discharge hole is provided, and a communication hole directed downward toward a gap below the bottom surface of the rotating plate from the liquid discharge hole is provided.

5. A steering damper as claimed in claim 4, wherein the liquid discharge hole provided in the rotating shaft is penetrated from a lower end surface to an upper end surface of the rotating shaft.

6. A steering damper as claimed in claim 4 or 5, wherein a drain bolt is detachably provided in an outer opening end of the liquid discharge hole provided in the rotating shaft.

7. A steering damper as claimed in any one of claims 3 to 6, wherein the case is constituted by upper and lower case bodies, and an outer surface of a side wall coming down from an outer periphery of a top surface of the upper case body is fitted to an inner surface of a side wall coming up from an outer periphery of a bottom surface of the lower case body via a seal member.
